# EUROPEAN PATENT APPLICATION

(11) **EP 4 769 666 A1**
(43) Date of publication of application: **01.07.2026**
(21) Application number: 25841533.0
(22) Date of filing: 16.07.2025
(51) Int. Cl.: H01M 10/6557, H01M 10/613, H01M 10/6551, H01M 50/502, H01M 50/172, H01M 10/04, H01M 50/242, H01M 50/531, H01M 10/625, B60L 50/64

(54) **UNIT CELL ASSEMBLY, BATTERY MODULE, BATTERY PACK, AND VEHICLE COMPRISING SAME**

(30) Priority: 16.07.2024 KR 20240093447; 15.07.2025 KR 20250094969
(71) Applicant: LG ENERGY SOLUTION, LTD., Seoul 07335 (KR)
(72) Inventor: PARK, Won Kyoung, Yuseong-gu Daejeon 34122 (KR); KIM, Younggil, Yuseong-gu Daejeon 34122 (KR); JUNG, Kitaek, Yuseong-gu Daejeon 34122 (KR)
(74) Representative: Plasseraud IP
(86) International application number: PCT/KR2025/010420
(87) International publication number: WO 2026/019242

(57) **Abstract**

A unit cell assembly according to an embodiment of the present disclosure includes a battery cell, standing in an up-down direction, with electrode leads protruding from both end portions in a front-rear direction, a cooling plate in surface-contact with the battery cell, a thermal resin being applied to at least a portion of the cooling plate, and a connector block binding the battery cell to the cooling plate.

## Description

### [Technical Field]

The present disclosure relates to a unit cell assembly, a battery module including the unit cell assembly, a battery pack, and a vehicle.

### [Background Art]

Unlike primary batteries, which are non-rechargeable, secondary batteries are rechargeable and dischargeable and are used not only in portable devices but also in electric vehicles (EVs) and hybrid electric vehicles (HEVs) powered by electrical power sources.

The types of secondary batteries that are currently widely used include lithium ion batteries, lithium polymer batteries, nickel cadmium batteries, nickel hydrogen batteries, nickel zinc batteries, etc. An operating voltage of these unit secondary battery cells, i.e., unit battery cells, is approximately 2.5 V to 4.6 V. Therefore, when a higher output voltage is required, a battery pack is configured by connecting a plurality of battery cells in series. In addition, a battery pack is configured by connecting a plurality of battery cells in parallel according to the charge/discharge capacity required for the battery pack. Therefore, the number of battery cells included in the battery pack may be set to vary according to the required output voltage or charge/discharge capacity.

In the case of configuring a battery pack by connecting a plurality of battery cells in series or in parallel, it is common to first configure a battery module including at least one battery cell, preferably, a plurality of battery cells, and then configure a battery pack using at least one of these battery modules and adding other components. Here, the battery module refers to a component in which a plurality of battery cells are connected in series or in parallel, and the battery pack refers to a component in which a plurality of battery modules are connected in series or in parallel to increase capacity and output, etc.

The related art pouch-type battery cells primarily adopt edge cooling at a sealing portion of three sides the battery cells. Indirect water cooling, in particular, has been employed, which, however, has a problem of a temperature difference across the entire battery cell surface. Furthermore, the related art battery cells feature a top venting structure in which, when thermal propagation occurs, flames are directed toward a passenger location, which is disadvantageous to drivers.

### [Disclosure]

### [Technical Problem]

The present disclosure is to improve rapid charging performance and durability degradation performance through direct contact cooling of a battery cell.

Furthermore, the present disclosure is to improve thermal propagation delay performance and enhance user safety through a bottom venting structure of a battery cell.

However, the technical problems to be solved by the present disclosure are not limited to the aforementioned problems, and other problems not mentioned will be clearly understood by those skilled in the art from the following description.

### [Technical Solution]

According to an embodiment of the present disclosure, a unit cell assembly includes: a battery cell, standing in an up-down direction, with electrode leads protruding from both end portions in a front-rear direction; a cooling plate in surface-contact with the battery cell, a thermal resin being applied to at least a portion of the cooling plate; and a connector block binding the battery cell to the cooling plate.

In an aspect of the present disclosure, the battery cell may include: an electrode assembly; an accommodation portion accommodating the electrode assembly; a sealing portion formed around the accommodation portion; and a pair of electrode leads connected to the electrode assembly and drawn outward from the sealing portion.

Here, the sealing portion may be configured in a form in which both end portions and one side portion connecting the both end portions are bonded, and the one side portion may be provided in a downward direction of the battery cell.

Preferably, a taping member may be partially attached to the one side portion.

In another aspect of the present disclosure, the connector block may be configured to be coupled to the cooling plate at both end portions of the battery cell.

The connector block may cover the electrode leads of the battery cell such that a portion of the electrode leads may be exposed to the outside.

The connector block may be located adjacent to the electrode lead of the battery cell and may be configured to enable electrical connection with a battery cell adjacent to the battery cell.

The connector block may be electrically connected to the electrode lead of the battery cell.

The connector block may include at least one of a busbar and a welding plate.

In another aspect of the present disclosure, the cooling plate may include: a cooling body having a cooling channel through which a coolant may be able to flow; a first end member provided at one end portion of the cooling body and including a coolant inlet configured to allow the coolant to flow in; and a second end member provided at the other end portion of the cooling body and including a coolant outlet configured to allow the coolant introduced from the coolant inlet to flow through the cooling channel and flow out to the outside.

Here, the cooling body may include: a body portion configured to be in surface-contact with the battery cell and having a planar shape; an upper flange portion bent and extending from one end portion of the body portion and configured to surround at least a portion of an upper end portion of the battery cell; and a lower flange portion bent and extending from the other end portion of the body portion and configured to surround at least a portion of a lower end portion of the battery cell.

Preferably, the lower flange portion may include at least one lower recess formed by denting at least a portion.

In an aspect of the present disclosure, a taping member may be partially attached to the battery cell, and the lower recess may be located to correspond to a region in which the taping member attached to the battery cell may be not located.

In another aspect of the present disclosure, the unit cell assembly may further include a compression pad in surface-contact with one side surface of the battery cell.

Preferably, the compression pad may be interposed between the battery cell and the cooling plate.

Meanwhile, the present disclosure provides a battery module including a plurality of unit cell assemblies according to the embodiment described above, as a battery module, and the plurality of the unit cell assemblies may be configured to be stacked in one direction, a welded portion formed by welding an electrode lead protruding from a first unit cell assembly and an electrode lead protruding from a second unit cell assembly adjacent to the first unit cell assembly to each other may be included, and an adhesive applied to at least one side surface of the unit cell assembly may be included.

Meanwhile, the present disclosure provides a battery pack including at least one battery cell or battery module according to the embodiment described above, as a battery pack.

In addition, the present disclosure provides a vehicle including at least one battery pack according to the embodiment described above, as a vehicle.

### [Effects of Invention]

The present disclosure enables direct contact cooling of a battery cell.

Furthermore, the present disclosure may improve rapid charging performance and durability degradation performance.

Furthermore, the present disclosure may improve thermal propagation delay performance.

Furthermore, the present disclosure may enhance user safety.

However, the effects achieved through the present disclosure are not limited to the effects described above, and other technical effects not mentioned will be clearly understood by those skilled in the art from the description of the disclosure given below.

### [Description of Drawings]

The following drawings attached to this specification illustrate preferred embodiments of the present disclosure and, together with the detailed description of the disclosure described below, serve to further understand the technical idea of the present disclosure, and therefore, the present disclosure should not be interpreted as being limited to matters described in such drawings.
FIG. 1 is a diagram illustrating a unit cell assembly according to an embodiment of the present disclosure.
FIG. 2 is an exploded perspective view of FIG. 1.
FIG. 3 is a diagram illustrating a battery cell according to an embodiment of the present disclosure.
FIG. 4 is a diagram illustrating a connector block according to an embodiment of the present disclosure.
FIG. 5 is a diagram illustrating a cooling plate according to an embodiment of the present disclosure.
FIG. 6 is a diagram illustrating a coupling relationship between a first end member or a second end member of a cooling plate and a cooling body according to an embodiment of the present disclosure.
FIG. 7 is a bottom perspective view of a cooling plate according to an embodiment of the present disclosure.
FIG. 8 is a diagram illustrating a unit cell assembly according to another embodiment of the present disclosure.
FIG. 9 is a diagram illustrating a unit cell assembly according to another embodiment of the present disclosure.
FIG. 10 is a diagram illustrating a process of coupling a unit cell assembly according to an embodiment of the present disclosure.
FIG. 11 is a diagram illustrating a battery module including a unit cell assembly according to an embodiment of the present disclosure.
FIG. 12 is a diagram illustrating a battery pack including the battery module of FIG. 11.
FIG. 13 is a diagram illustrating a vehicle including the battery pack of FIG. 12.

### [Mode for carrying out the Invention]

The advantages and features of the present disclosure and the methods for achieving them will become apparent by referring to the embodiments described in detail below together with the accompanying drawings. However, the present disclosure is not limited to the embodiments disclosed below but may be implemented in various different forms, and these embodiments are provided only to make the disclosure of the present disclosure complete and to fully inform those skilled in the art of the scope of the invention, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness of layers, films, panels, regions, etc., are exaggerated for clarity. The various Figures are thus not to scale. Like reference numerals designate like elements throughout the specification. It will be understood that when an element, such as a layer, film, region, or substrate is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate is referred to as being "below" another element, it may be directly below the other element or intervening elements may also be present. In contrast, when an element is referred to as being "directly under" another element, there are no intervening elements present.

When two components are referred to as being equal, it represents that they are 'substantially equal'. Accordingly, substantially equal may encompass all cases having the deviation regarded as a low level in the corresponding technical field, for example, the deviation of 5% or less. In addition, a uniform parameter in a predetermined area may be uniform from the average point of view.

Throughout the specification, unless stated otherwise, each element may be singular or plural.

When an element is "above (or under)" or "on (or below)" another element, the element may be on an upper surface (or a lower surface) of the other element, and intervening elements may be present between the element and the other element on (or below) the element.

In addition, when an element is referred to as being "connected", "coupled" or "linked" to another element, the element may be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

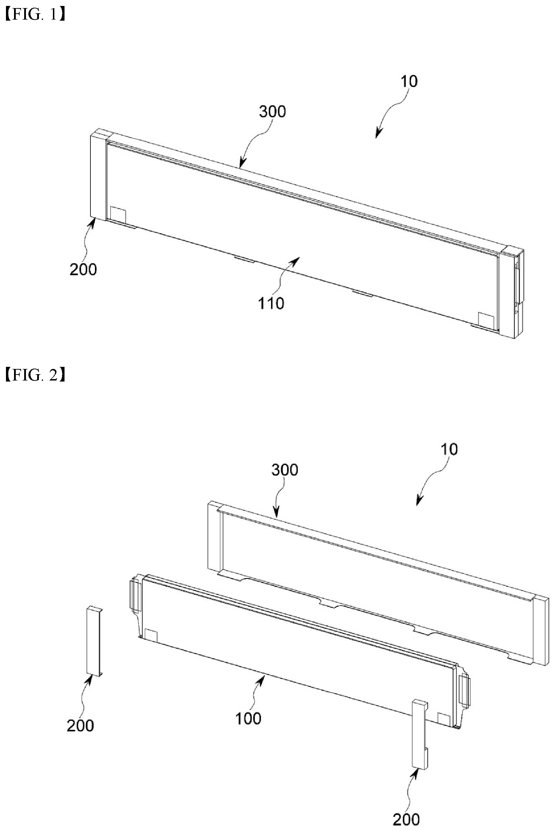

FIG. 1 is a diagram illustrating a unit cell assembly 10 according to an embodiment of the present disclosure, and FIG. 2 is an exploded perspective view of FIG. 1.

Referring to FIGS. 1 and 2, the unit cell assembly 10 according to the present disclosure includes a battery cell 100, a connector block 200, and a cooling plate 300. The unit cell assembly 10 may further include a compression pad 400.

The structure of the unit cell assembly 10 described above allows for the replacement of individual battery cells 100 due to the unit design. For example, if a defect occurs during lead welding of the battery cell 100, only the defective unit cell assembly 10 may be selectively replaced according to the present disclosure.

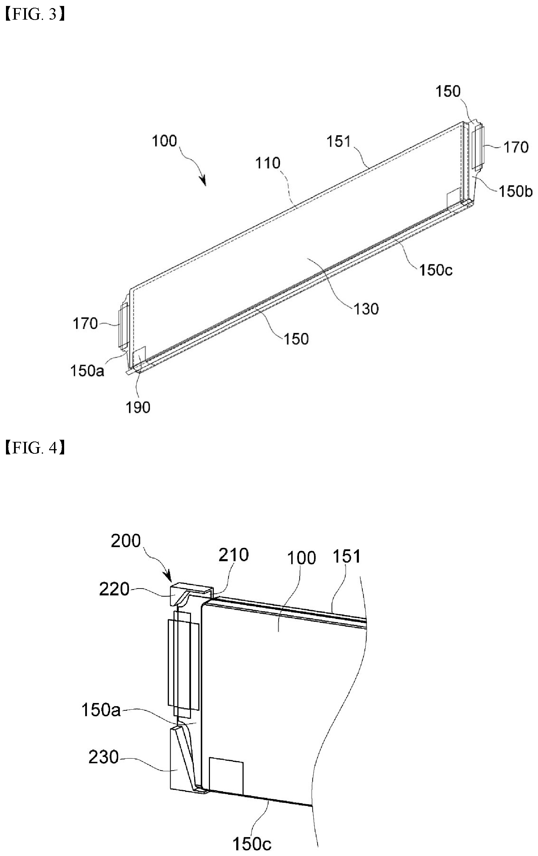

FIG. 3 is a diagram illustrating the battery cell 100 according to an embodiment of the present disclosure.

Referring to FIG. 3, the battery cell 100 may be a secondary battery, for example, a pouch-type battery cell 100. The battery cell 100 may be provided to stand in an up-down direction. Referring to FIG. 3, the battery cell 100 may include an electrode assembly 110, an accommodation portion 130 that accommodates the electrode assembly 110, a sealing portion 150 formed around the accommodation portion 130, and a pair of electrode leads 170 connected to the electrode assembly 110 and drawn outward from the sealing portion 150.

The battery cell 100 may be provided in a form in which the electrode assembly 110 is accommodated in the accommodation portion 130 and both end portions 150a and 150b of the accommodation portion 130 and one side portion 150c connecting the both end portions 150a and 150b of the accommodation portion 130 are bonded together. In other words, the battery cell 100 according to the present embodiment has a total of three sealing portions 150. The sealing portions 150 are sealed using a method, such as thermal fusion, and the other side portion may be formed as a connection portion 151. The accommodation portion 130 may be formed of a laminate sheet including a resin layer and a metal layer.

The pair of electrode leads 170 are coupled to electrode tabs (not shown) provided in the electrode assembly 110 and may be drawn out of the sealing portion 150 through the sealing portion 150. The pair of electrode leads 170 may extend in a length direction of the battery cell 100. In this case, the length direction may refer to a front-rear direction. That is, the pair of electrode leads 170 may be drawn out in the same or opposite directions. Preferably, the electrode leads 170 may protrude and extend to both end portions in a front-rear direction.

Meanwhile, the battery cell 100 may include a venting portion. In the pouch-type battery cell 100, venting generally occurs at the sealing portion 150 of the battery cell 100 when abnormal heating occurs and the resultant internal pressure increases. That is, when the internal pressure increases, the one side portion 150c which is the sealing portion 150 formed in the up-down direction of the battery cell 100 is broken first compared to both end portions which is the sealing portion 150 formed in a direction in which the electrode lead 170 is drawn out in many cases. Therefore, the venting portion may be provided on the one side portion 150c of the battery cell 100.

According to the configuration of the present disclosure, when venting gas or flames are generated in the battery cell 100 due to an event, such as thermal runaway, the gas or flames may be smoothly discharged to the outside of the battery cell 100. Therefore, explosion of a battery module including the battery cell 100 may be prevented.

In an aspect of the present disclosure, the one side portion 150c may be provided in a downward direction of the battery cell 100.

Specifically, referring to FIG. 3, one side portion 150c of among the three sides of the sealing portion 150 may be provided in a direction facing downward of the battery cell 100. Since the venting portion is provided in the one side portion 150c of the sealing portion 150, the venting portion may be provided in a lower end region of the battery cell 100.

For example, the related art battery cell 100 includes a venting portion in an upward direction of the battery cell 100. In this case, a battery module or pack including the battery cell 100 may be included in a lower region of the vehicle. In this case, if thermal propagation (TP) occurs within the battery module or pack, the flames may erupt toward a vehicle occupant, potentially causing injury to a driver.

In contrast, according to the present disclosure, since the venting portion of the battery cell 100 is located in a lower end region of the battery cell 100, thermal propagation delay performance may be improved through the lower venting of the battery cell 100. Furthermore, this configuration enhances user safety.

In another aspect of the present disclosure, a taping member 190 may be partially attached to the battery cell 100. For example, the taping member 190 may be partially attached to one side portion 150c.

Referring to FIG. 3, the taping member 190 may have an adhesive on at least one surface so as to be attached to the battery cell 100. Furthermore, the taping member 190 may be attached to the sealing portion 150 of the battery cell 100. Specifically, as illustrated in FIG. 3, the taping member 190 may be attached to the one side portion 150c of the battery cell 100. More specifically, the taping member 190 may be attached to a lower end region of the battery cell 100.

To reduce a space occupied by the battery cell 100 within the battery module, a portion of the sealing portion 150 may be folded. For example, referring to FIG. 3, the one side portion 150c in which the electrode lead 170 is not located may be folded.

With the configuration, the taping member 190 may stably maintain the folded shape. For example, the taping member 190 may be attached to the battery cell 100 by securing the upper end sealing member 150 and the both side accommodation portions 130 in a state in which the sealing member 150 is folded twice. Furthermore, with the configuration, the space occupied by the battery cell 100 may be reduced, thereby improving energy density.

FIG. 4 is a diagram illustrating the connector block 200 according to an embodiment of the present disclosure.

Referring to FIG. 4, the connector block 200 may be located adjacent to the electrode lead 170 of the battery cell 100. The connector block 200 may be configured to enable electrical connection with the battery cell 100 adjacent to the battery cell 100.

The connector block 200 may be configured to be coupled to the cooling plate 300 at both end portions of the battery cell 100. For example, the connector block 200 may be coupled to a first end member 320 or a second end member 330 of the cooling plate 300, which will be described below. For example, the connector block 200 may be fixed to the first end member 320 or the second end member 330 by bonding. Alternatively, the connector block 200 may be fixed to the first end member 320 or the second end member 330 by a structural coupling method.

In this manner, the connector block 200 may maintain constantly a size of the unit cell assembly 10 in a thickness direction. Specifically, the connector block 200 may maintain a width of the unit cell assembly 10 in a left-right direction constantly by binding the battery cell 100 and the cooling plate 300 constituting the unit cell assembly 10 integrally. In the case in which the unit cell assembly 10 further includes the compression pad 400, the connector block 200 may bind the battery cell 100, the compression pad 400, and the cooling plate 300 constituting the unit cell assembly 10 integrally to maintain the width of the unit cell assembly 10 constant in the left-right direction. For example, the battery cell 100 may experience a swelling phenomenon in which the width in the left-right direction swells due to repeated charging and discharging. In this case, the compression pad 400, to be described below, is compressed, while compensating for the swelling phenomenon. Here, the connector block 200 restrains the unit cell assembly 10 in the left-right direction, thereby maintaining the thickness of the unit cell assembly 10 constantly in the left-right direction.

Meanwhile, the connector block 200 may be configured to surround the electrode lead 170, while being spaced apart from the electrode lead. The connector block 200 may cover the electrode lead 170 so that a portion of the electrode lead 170 is exposed to the outside. The cooling plate 300 may be disposed on one surface of the battery cell 100, and the connector block 200 may be disposed on the other surface of the battery cell 100. More specifically, the connector block 200 may include a flat portion 210, an upper cover 220, and a lower cover 230. The flat portion 210 may have a flat shape provided approximately parallel to both end portions 150a and 150b of the sealing portion 150 of the battery cell 100. The flat portion 210 may be provided on one surface of both end portions 150a and 150b of the sealing portion 150 of the battery cell 100. The upper cover 220 may have a structure that extends from an upper edge of the flat portion 210 to be perpendicular to the flat portion 210. The upper cover 220 may have an inner edge shape that follows the shape of the sealing portion 150 and the electrode lead 170. The lower cover 230 may have a structure that extends from a lower edge of the flat portion 210 to be perpendicular to the flat portion 210. The lower cover 230 may have an inner edge shape that follows the shape of the sealing portion 150 and the electrode lead 170.

As can be seen in FIG. 4, the electrode lead 170 may be tilted upward with respect to the center line of the battery cell 100. This may be a structure for securing a coolant inflow path for the cooling plate 300, which will be described below. Meanwhile, if the electrode lead 170 is tilted upward with respect to the center line of the battery cell 100, the lower cover 230 may extend longer in the up-down direction than the upper cover 220 of the connector block 200.

In another aspect of the present disclosure, the connector block 200 may be configured to expand the electrical connection of the battery cell 100. For example, the connector block 200 may include at least one of a busbar and a welding plate.

Here, the busbar may include a busbar serving as a welding connection between one battery cell 100 and an adjacent battery cell 100. That is, the connector block 200 may be configured for high voltage (HV) connections for positive or negative electrode connections.

Meanwhile, the connector block 200 may be configured for low voltage (LV) connections, such as voltage sensing lines for battery control. For example, the connector block 200 may include a welding plate for voltage sensing lines, etc.

The above configuration enables direct connection between leads, compared to the related art cell-to-cell connections using a busbar frame assembly. Accordingly, by eliminating unnecessary connecting members during welding, material costs may be reduced and energy density may be improved.

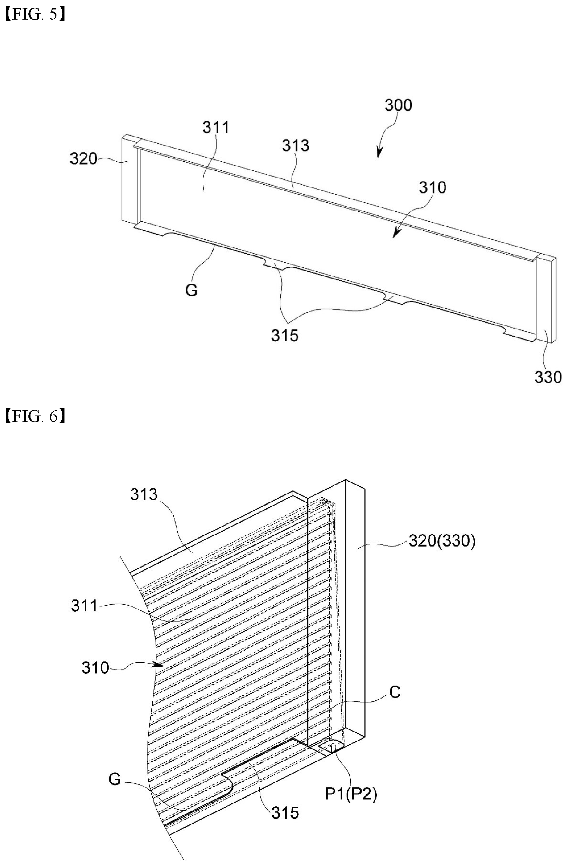

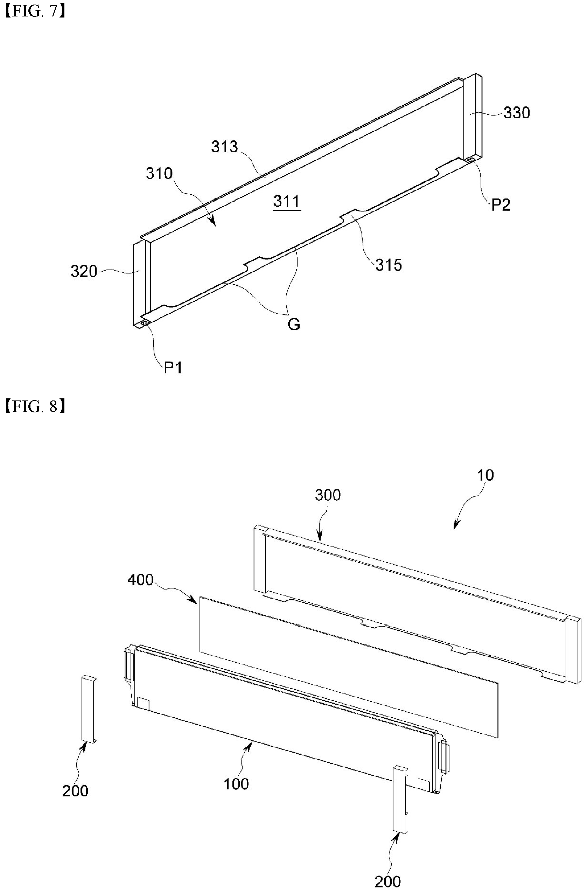

FIG. 5 is a diagram illustrating the cooling plate 300 according to an embodiment of the present disclosure, and FIG. 6 is a diagram illustrating a coupling relationship between the first end member 320 or the second end member 330 of the cooling plate 300 and a cooling body 310 according to an embodiment of the present disclosure. FIG. 7 is a bottom perspective view of the cooling plate 300 according to an embodiment of the present disclosure.

Referring to FIGS. 5 to 7, the cooling plate 300 may be in surface-contact with the battery cell 100. A thermal resin TR may be applied to at least a portion of the cooling plate 300. The cooling plate 300 may include the cooling body 310, the first end member 320, and the second end member 330. The first end member 320 may be configured to be coupled to one end portion of the cooling body 310. The second end member 330 may be configured to be coupled to the other end portion of the cooling body 310.

Referring to FIG. 6, the cooling body 310 may be configured to have a planar shape extending approximately in the up-down direction and in the front-rear direction. The cooling body 310 may have a cooling channel C through which a coolant may flow. The cooling channel C may be provided in plurality. The cooling channel C may be configured to have a pipe structure extending in the front-rear direction. The plurality of cooling channels C may be arranged parallel to each other. The plurality of cooling channels C may be configured to be connected in parallel. Accordingly, the accommodation portion of the battery cell 100 in surface-contact with the cooling body 310 may be cooled simultaneously throughout. As a result, temperature variations across the entire region of the battery cell 100 may be minimized.

Referring to FIGS. 5 and 6, the first end member 320 may be provided at one end portion of the cooling body 310. The first end member 320 includes a coolant inlet P1 configured to allow coolant to flow in. The coolant flowing in from the coolant inlet P1 may travel along the internal space formed within the first end member 320 and then flow into the cooling channel C of the cooling body 310 coupled to the first end member 320.

Here, the coolant inlet P1 may be provided on a lower surface of the cooling plate 300. More specifically, the coolant inlet P1 may be provided on the lower surface of the first end member 320. That is, the coolant may flow into the first end member 320 through the lower surface of the first end member 320.

The internal space formed within the first end member 320 may have a structure that narrows upward. That is, the internal space may be configured to have a tapered structure in which a flow area narrows upward.

Referring back to FIGS. 5 and 6, the second end member 330 may be provided at the other end portion of the cooling body 310. The second end member 330 includes a coolant outlet P2 configured to allow the coolant to flow out. The coolant flowing through the cooling channel C of the cooling body 310 may flow into the internal space of the second end member 330.

In this case, the coolant outlet P2 may be provided on a lower surface of the cooling plate 300. More specifically, the coolant outlet P2 may be provided on the lower surface of the second end member 330. That is, the coolant may be discharged toward the outside of the second end member 330 through the lower surface of the second end member 330. The discharged coolant may then be re-cooled and circulated through a separate external cooling process and then flow back into the coolant inlet P1 of the first end member 320.

Meanwhile, the internal space formed within the second end member 330 may have a structure that narrows upward. That is, the internal space may be configured to have a tapered structure in which the flow area narrows upward.

In this regard, the related art battery cells 100 adopts indirect water cooling, as a method of cooling the edges of the sealing portions 150 on three sides of the battery cell 100, resulting in a temperature difference across the entire surface of the battery cell 100. However, according to the present disclosure, including the above-described configuration, effective cooling may be performed through direct contact cooling of the battery cell 100. Specifically, the direct contact cooling structure described above minimizes temperature variations across the entire region of the battery cell 100. Consequently, the rapid charging performance of the battery cell 100 may be improved, and further, the durability degradation performance of the battery cell 100 may be enhanced.

Referring to FIG. 7, the cooling body 310 may include a body portion 311, an upper flange portion 313, and a lower flange portion 315.

The body portion 311 is configured to be in surface-contact with the battery cell 100 and may be configured to have a flat shape. The body portion 311 may be configured to have a planar shape extending approximately in the up-down direction and front-rear direction. The body portion 311 may be provided with a cooling channel C through which a coolant may flow. The cooling channel C may be provided in plurality. The cooling channel C may be configured to have a pipe structure extending in the front-rear direction. The plurality of cooling channels C may be arranged parallel to each other. The plurality of cooling channels C may be configured to be connected in parallel. Accordingly, the accommodation portion of the battery cell 100 in surface-contact with the body portion 311 may be cooled simultaneously throughout.

The upper flange portion 313 may be bent and extend from one end portion of the body portion 311. The upper flange portion 313 may be configured to surround at least a portion of the upper end portion of the battery cell 100.

The lower flange portion 315 may be bent and extend from the other end portion of the body portion 311. The lower flange portion 315 may be configured to surround at least a portion of the lower portion of the battery cell 100. In this case, the lower flange portion 315 may include at least one lower recess G formed by denting at least a portion. Preferably, the recess G may be provided in plurality.

With this structure, the lower recess G is adjacent to the venting portion of the battery cell 100. Therefore, if venting gas or flames occur in the battery cell 100 due to an event, such as thermal runaway, such gas or flames may be smoothly discharged to the outside of the battery cell 100 through the lower recess G.

In an aspect of the present disclosure, the lower recess G may be located to correspond to a region in which the taping member 190 attached to the battery cell 100 is not located.

For example, referring to FIG. 3, the taping member 190 may be attached to one side portion 150c of the battery cell 100. That is, the taping member 190 may be attached to a lower end region of the battery cell 100. More specifically, the taping member 190 may be attached to a region adjacent to both end portions in the front-rear direction in the lower end region of the battery cell 100.

Meanwhile, referring to FIG. 7, the lower recess G may be provided in a region excluding regions adjacent to both end portions in the front-rear direction in the lower end region of the battery cell 100. More specifically, the lower recess G may be provided in plurality in the region excluding the regions adjacent to both end portions in the front-back direction in the lower end region of the battery cell 100.

With this structure, when venting occurs in the battery cell 100, venting gas and/or flames may be released first through an unattached portion of the taping member 190. Therefore, when the lower recess G is formed in the region corresponding to the unattached portion of the taping member 190, gas or flames emitted from the battery cell 100 may be more easily discharged to the outside.

FIG. 8 is a diagram illustrating a unit cell assembly 10 according to another embodiment of the present disclosure.

Referring to FIG. 8, the unit cell assembly 10 may further include the compression pad 400. Preferably, the compression pad 400 may be configured to be interposed between the battery cell 100 and the cooling plate 300.

The compression pad 400 may be configured to be in surface-contact with one side surface of the battery cell 100. The compression pad 400 may be configured to compensate for swelling that occurs during charging and discharging of the battery cell 100. That is, the compression pad 400 may be configured to have compressibility. Preferably, the pad may be configured to be both compressible and expandable.

With this configuration, even if the battery cell 100 swells in the left-right direction due to repeated charging and discharging, the total thickness of the unit cell assembly 10 may be maintained constant by the compression of the compression pad 400. In other words, the compression pad 400 may maintain the thickness of the unit cell assembly 10 constantly in the left-right direction.

Preferably, the compression pad 400 may include at least one of polyurethane and silicone. In particular, when the compression pad 400 includes silicone, the compression pad 400 may also have a thermal propagation prevention function.

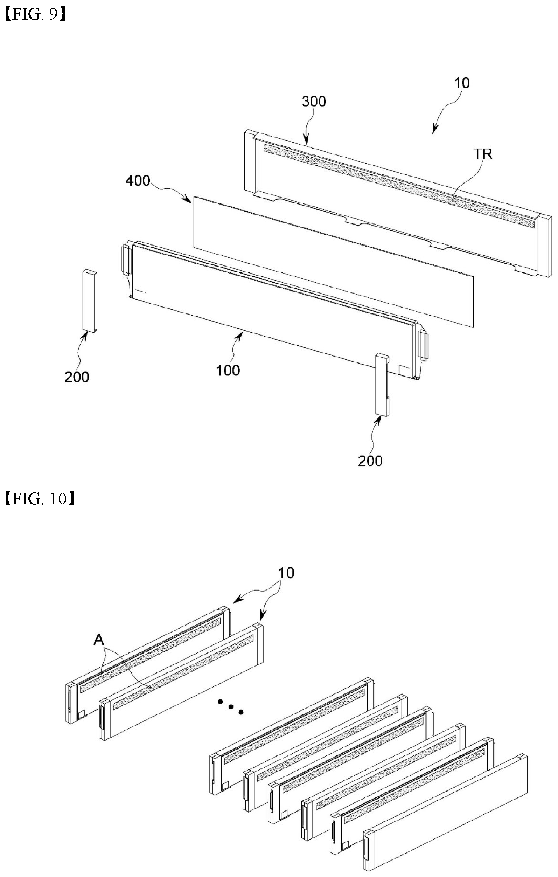

FIG. 9 is a diagram illustrating a unit cell assembly 10 according to another embodiment of the present disclosure.

Referring to FIG. 9, a thermal resin TR (a thermally conductive resin) may be provided in at least a portion of the cooling plate 300. Preferably, the thermal resin TR may be applied to an upper portion of the cooling plate 300. The thermal resin TR may include a thermal interface material (TIM). The thermal interface material may include, for example, at least one of a heat dissipation pad, a heat dissipation sheet, heat dissipation grease, a thermally conductive adhesive, and a phase change material.

With this configuration, the heat dissipation function may be further enhanced through the thermal resin TR. More specifically, the thermal resin TR may effectively dissipate heat generated during charging and discharging of the battery cell 100 by thermally connecting the battery cell 100 and the cooling plate 300.

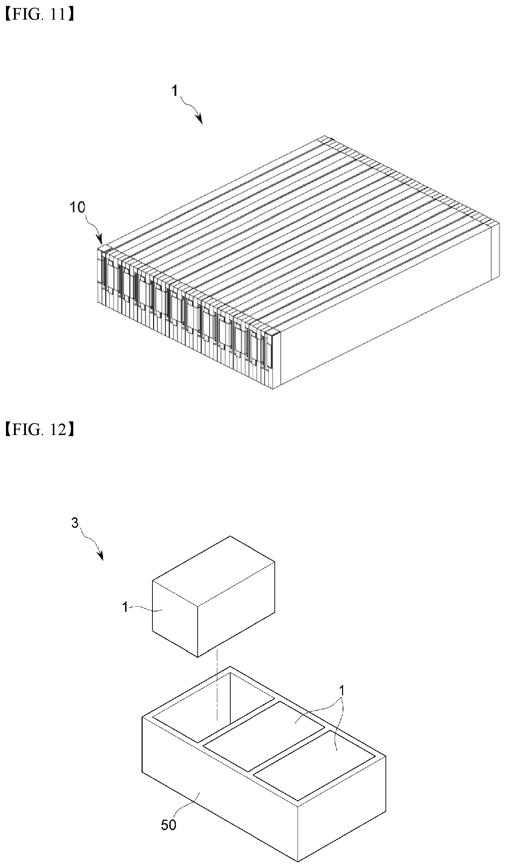

FIG. 10 is a diagram illustrating a process of coupling the unit cell assembly 10 according to an embodiment of the present disclosure, and FIG. 11 is a diagram illustrating a battery module 1 including the unit cell assembly 10 according to an embodiment of the present disclosure.

Referring to FIGS. 10 and 11, the battery module 1 may include a plurality of unit cell assemblies 10 according to an embodiment of the present disclosure. In this case, the plurality of unit cell assemblies 10 may be configured to be stacked in one direction. Specifically, the plurality of unit cell assemblies 10 may be stacked side by side in a vertically upright position.

Meanwhile, the electrode lead 170 protruding from a first unit cell assembly 10 and the electrode lead 170 protruding from a second unit cell assembly 10 adjacent to the first unit cell assembly 10 may be welded to each other to form a welded portion. The electrode leads 170 on both sides of the battery cell 100 may protrude outward from both sides of the unit cell assembly 10. More specifically, the connection of the unit cell assemblies 10 will be described in detail. Two first and second unit cell assemblies 10 are arranged in a straight line in the length direction. Then, the electrode leads 170 of the first and second unit cell assemblies 10 disposed adjacent to each other are directly connected by welding. Therefore, a separate busbar may not be required for the connection of the unit cell assemblies 10. After the electrode leads 170 of the first and second unit cell assemblies 10 are connected in this manner, one unit cell assembly 10 may be stacked to overlap the side surface of the other unit cell assembly 10. Here, the connected electrode leads 170 may be bent to stack the two unit cell assemblies 10. Then, the electrode leads 170 of another unit cell assembly 10 may be connected to the two unit cell assemblies 10 connected by the electrode leads 170, and the connected unit cell assemblies 10 may be stacked on the two stacked unit cell assemblies 10. As another example, as for the connection of the plurality of unit cell assemblies 10, after connecting all of the electrode leads 170 of the unit cell assemblies 10, the unit cell assemblies 10 may be stacked by bending the connected electrode leads 170.

In this manner, in the present embodiment, a battery assembly or the battery module 1 may be configured by stacking a plurality of unit cell assemblies 10. In the related art, a plurality of battery cells 100 are stacked and then the electrode leads 170 are bent and welded. This resulted in insufficient space behind the electrode leads during welding, making it difficult to confirm weld surface contact. Furthermore, if a defect occurs during welding, the reuse of the battery cells 100 is difficult. However, in the present embodiment, after the battery cells 100 are electrically connected, the electrode leads 170 are bent, and the battery cells 100 are stacked, thereby resolving the problems.

Referring to FIG. 10, an adhesive A may be applied to at least one side surface of the unit cell assembly 10. The adhesive A may serve to bond the plurality of unit cell assemblies 10.

In FIG. 11, the connector blocks 200 of the unit cell assemblies 10, located at the outermost left and right ends of the battery module 1, may function as terminals. That is, the connector block 200 of the unit cell assembly 10, located at the outermost left and right ends, may function as a positive (+) terminal or negative (-) terminal of the battery module 1. The connector block 200 may be electrically connected to the electrode leads 170 of the battery cell 100. Furthermore, the connector block 200 may also be electrically connected to a sensing plate (a sensing circuit board) for voltage sensing, etc.

Meanwhile, although a battery module housing is not separately illustrated in FIGS. 10 and 11, it is understood that a battery module housing may be additionally included in some cases. Alternatively, the battery module 1 may be accommodated in a pack housing 50 without a separate housing to have a cell-to-pack structure.

FIG. 12 is a diagram illustrating a battery pack 3 including the battery module 1 of FIG. 11.

Referring to FIG. 12, the battery pack 3 according to an embodiment of the present disclosure includes a battery assembly or the battery module 1 in which a plurality of unit cell assemblies 10 according to an embodiment of the present disclosure are electrically connected, as described above, and the pack housing 50 accommodating the battery module. In the drawings of the present disclosure, components for electrical connection, such as busbars, cooling units, and power terminals, are omitted for convenience of illustration. Furthermore, the battery pack 3 may further include various components, such as battery management systems (BMS), pack cases, relays, current sensors, and other components known at the time of filing of the present disclosure.

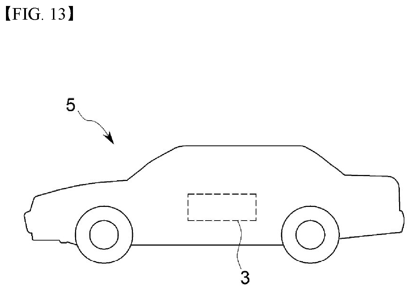

FIG. 13 is a diagram illustrating a vehicle 5 including the battery pack 3 of FIG. 12.

Referring to FIG. 13, the vehicle 5 according to an embodiment of the present disclosure may be, for example, an electric vehicle, a hybrid vehicle, or a plug-in hybrid vehicle and includes the battery pack 3 according to an embodiment of the present disclosure. The vehicle 5 includes both a four-wheeled vehicle and a two-wheeled vehicle. The vehicle 5 operates upon receiving power from the battery pack 3 according to an embodiment of the present disclosure. Furthermore, the vehicle 5 according to the present disclosure may further include various other components in addition to the battery cell 100 or battery pack 3. For example, the vehicle 5 according to the present disclosure may further include a vehicle body, a motor, a control device, such as an electronic control unit (ECU), and the like, in addition to the battery cell 100.

Meanwhile, although terms indicating directions, such as up and down, are used in this specification, it is obvious to those skilled in the art that these terms are only for the convenience of description and may vary depending on a location of a target object or a location of an observer.

Although the present disclosure has been described above with limited embodiments and drawings, the present disclosure is not limited thereto, and it is obvious that various modifications and variations may be made within the scope of the technical idea of the present disclosure and the equivalent scope of the claims to be described below by those skilled in the art.

### [Industrial Applicability]

The disclosure provide a unit cell assembly capable of direct contact cooling of battery cells and a battery module including the same.

## Claims

1. A unit cell assembly comprising:
a battery cell, standing in an up-down direction, with electrode leads protruding from both end portions in a front-rear direction;
a cooling plate in surface-contact with the battery cell, a thermal resin being applied to at least a portion of the cooling plate; and
a connector block binding the battery cell to the cooling plate.

2. The unit cell assembly of claim 1, wherein
the battery cell includes:
an electrode assembly;
an accommodation portion accommodating the electrode assembly;
a sealing portion formed around the accommodation portion; and
a pair of electrode leads connected to the electrode assembly and drawn outward from the sealing portion.

3. The unit cell assembly of claim 2, wherein
the sealing portion is configured in a form in which both end portions and one side portion connecting the both end portions are bonded, and the one side portion is provided in a downward direction of the battery cell.

4. The unit cell assembly of claim 3, wherein
a taping member is partially attached to the one side portion.

5. The unit cell assembly of claim 1, wherein
the connector block is configured to be coupled to the cooling plate at both end portions of the battery cell.

6. The unit cell assembly of claim 5, wherein
the connector block covers the electrode leads of the battery cell such that a portion of the electrode leads is exposed to the outside.

7. The unit cell assembly of claim 1, wherein
the connector block is located adjacent to the electrode lead of the battery cell and is configured to enable electrical connection with a battery cell adjacent to the battery cell.

8. The unit cell assembly of claim 1, wherein
the connector block is electrically connected to the electrode lead of the battery cell.

9. The unit cell assembly of claim 1, wherein
the connector block includes at least one of a busbar and a welding plate.

10. The unit cell assembly of claim 1, wherein
the cooling plate includes:
a cooling body having a cooling channel through which a coolant is able to flow;
a first end member provided at one end portion of the cooling body and including a coolant inlet configured to allow the coolant to flow in; and
a second end member provided at the other end portion of the cooling body and including a coolant outlet configured to allow the coolant introduced from the coolant inlet to flow through the cooling channel and flow out to the outside.

11. The unit cell assembly of claim 10, wherein
the cooling body includes:
a body portion configured to be in surface-contact with the battery cell and having a planar shape;
an upper flange portion bent and extending from one end portion of the body portion and configured to surround at least a portion of an upper end portion of the battery cell; and
a lower flange portion bent and extending from the other end portion of the body portion and configured to surround at least a portion of a lower end portion of the battery cell.

12. The unit cell assembly of claim 11, wherein the lower flange portion includes at least one lower recess formed by denting at least a portion.

13. The unit cell assembly of claim 12, wherein a taping member is partially attached to the battery cell, and the lower recess is located to correspond to a region in which the taping member attached to the battery cell is not located.

14. The unit cell assembly of claim 1, further comprising a compression pad in surface-contact with one side surface of the battery cell.

15. The unit cell assembly of claim 14, wherein the compression pad is interposed between the battery cell and the cooling plate.

16. A battery module comprising:
a plurality of unit cell assemblies according to claim 1.

17. The battery module of claim 16, wherein
the plurality of the unit cell assemblies are configured to be stacked in one direction,
a welded portion formed by welding an electrode lead protruding from a first unit cell assembly and an electrode lead protruding from a second unit cell assembly adjacent to the first unit cell assembly to each other is included, and
an adhesive applied to at least one side surface of the unit cell assembly is included.

18. A battery pack comprising the unit cell assembly described in claim 1 or the battery module described in claim 16.

19. A vehicle comprising at least one battery pack described in claim 18.
